# EUROPEAN PATENT SPECIFICATION

(11) **EP 3 512 233 B1**
(45) Date of publication and mention of the grant of the patent: **01.11.2023**
(21) Application number: 16917329.1
(22) Date of filing: 30.09.2016
(51) Int. Cl.: H04L 41/0806, H04L 41/5041, H04W 48/18, H04L 41/0895, H04L 41/40, H04L 43/08, H04W 24/04, H04L 45/302, H04W 88/18

(54) **METHOD FOR MANAGING NETWORK SLICE AND MANAGEMENT UNIT**
VERFAHREN ZUR VERWALTUNG VON NETZWERK-SLICES UND VERWALTUNGSEINHEIT
PROCÉDÉ DE GESTION DE TRANCHE DE RÉSEAU ET UNITÉ DE GESTION

(43) Date of publication of application: 17.07.2019
(73) Proprietor: Huawei Technologies Co., Ltd., Longgang District Shenzhen, Guangdong 518129 (CN)
(72) Inventor: ZHOU, Yan, Shenzhen Guangdong 518129 (CN); XU, Ruiyue, Shenzhen Guangdong 518129 (CN)
(74) Representative: Epping - Hermann - Fischer
(86) International application number: PCT/CN2016/101211
(87) International publication number: WO 2018/058579

(56) References cited:
- CN-A- 104 125 091
- CN-A- 105 516 312
- US-A1- 2013 212 285
- US-A1- 2014 223 325
- US-A1- 2015 043 382
- US-A1- 2015 263 891
- AKIHIKO NAKAO 5GMF / THE UNIVERSITY OF TOKYO JAPAN: "Baseline Document: Application of network softwarization to IMT-2020;IMT-O-028", ITU-T DRAFT; STUDY PERIOD 2013-2016; FOCUS GROUP IMT-2020; SERIES IMT-O-028, INTERNATIONAL TELECOMMUNICATION UNION, GENEVA ; CH , vol. imt-2020 25 May 2016 (2016-05-25), pages 1-57, XP044242273, Retrieved from the Internet: URL:https://extranet.itu.int/ITU-T/focusgr oups/imt-2020/FG IMT2020 Output Documents/O-028.docx [retrieved on 2016-05-25]
- ETRI: "High-level Functional Architecture for the Network Slicing", 3GPP DRAFT; S2-161833_[REVISED S2-161629]_HIGH-LEVEL FUNCTIONAL ARCHITECTURE FOR THE NETWORK SLICING, 3RD GENERATION PARTNERSHIP PROJECT (3GPP), MOBILE COMPETENCE CENTRE ; 650, ROUTE DES LUCIOLES ; F- , vol. SA WG2, no. Sophia Antipolis, FRANCE; 20160411 - 20160415 6 April 2016 (2016-04-06), XP051086821, Retrieved from the Internet: URL:http://www.3gpp.org/ftp/tsg_sa/WG2_Arc h/TSGS2_114_Sophia_Antipolis/Docs/ [retrieved on 2016-04-06]
- ERICSSON: "Isolation aspects of Network Slicing", 3GPP DRAFT; S2-161482_SLICE_ISOLATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sophia Antipolis, FRANCE; 20160411 - 20160415 5 April 2016 (2016-04-05), XP051086485, Retrieved from the Internet: URL:http://www.3gpp.org/ftp/tsg_sa/WG2_Arc h/TSGS2_114_Sophia_Antipolis/Docs/ [retrieved on 2016-04-05]

## Description

### TECHNICAL FIELD

Embodiments of the present invention relate to the communications field, and in particular, to a network slice management method and a management unit.

### BACKGROUND

Currently, there is no precise definition of a 5th Generation (5th Generation, 5G) mobile communications technology concept, but some consensus is reached on 5G in the industry and is as follows: A 5G system is to be put into commercial use in approximately 2020, and for a future use case, a new-type extensible and programmable connection service is required, and aspects including a speed, a capacity, security, reliability, availability, a latency, a battery lifespan, and the like all need to be greatly upgraded.

To meet the foregoing widely changing use case needs, the 5G system is to use a technology that is based on logic rather than a physical resource. The 5G system can enable an operator to provide a network for a user as a service. To be specific, the operator can provide a connection service by using an entity network in a form of "network as a service". In this manner, resource allocation and resource reallocation can be flexibly performed based on a user need, and a key to this manner is a network slice (Network Slice). Network slices are communication resources ensuring that a bearer service can meet a Service Level Agreement (Service Level Agreement, SLA) requirement. Hard isolation (physical isolation), soft isolation (logical isolation), or application isolation can be performed on these resources based on different needs. It can be considered that one network slice is a combination of network functions and resources that are required for completing a service or some services, and is a logical network.

A "one-size-fits-all" network architecture of a conventional cellular network has a dedicated support and information technology (Information Technology, IT) system, can be used to predict traffic and traffic growth, and is very suitable for a single-service type user network. However, by using this vertical architecture, the operator has difficulty in extending a telecommunication network, and also has great difficulty in performing adjustment based on continuously changing user needs, and meeting a need in a new-type use case. Therefore, in a 5G era, tens of thousands of use cases, numerous user types, and use of various applications can be supported only by adjusting the conventional cellular network and the "one-size-fits-all" network architecture.

In a future 5G system, a network is further abstracted as a network slice. This connection service is defined based on functions implemented by much customized software. These software functions include a geographical coverage area, duration, a capacity, a speed, a latency, reliability, security, availability, and the like. The network slice is to be defined at a radically new level, and is more like an on-demand network.

For example, an electric power company needs to provide a connection for a smart meter of the electric power company. This need can be converted into a network slice that connects a series of machine-to-machine (machine-to-machine, M2M) devices, and the network slice has a specific latency and a data rate that can meet a requirement of completing status update and download within a specified time. However, this service needs a relatively high security level, high availability, and high reliability. The electric power company may further need to provide a connection for a faulty sensor of the electric power company. A network slice that provides this type of service can receive status indicators from all M2M devices in a system around the clock, needs pure data coverage with high availability and high durability, and has medium security and a moderate latency. In addition, various network functions such as a function of implementing higher-level security or a near-zero latency can be configured for the network slice that provides the connection service based on the use case.

For another example, the operator wants to provide an ultra-high throughput for streaming services of all users in a specific country. A network slice in this caseneeds to have a high data rate and a low latency. In addition, some key services may need instant access to a network capacity or network coverage in an emergent case. For this type of use case, the network slice may be prearranged by using a protocol and provided by the operator on demand. A key to this type of use case is that a capacity/on-demand coverage can be implemented only by signing a service protocol.

The 5G network slice proposes a need for network sharing and isolation between network slices, and proposes a solution prototype for selecting a network slice by UE. In a 5G network slice technology, network sharing may imply sharing of mobile fronthaul and backhaul network resources. The network operator is allowed to provide better quality of service (Quality of Service, QoS), to optimize a shared network resource.

A 3rd Generation Partnership Project (3rd Generation Partnership Project, 3GPP) system needs to allow the operator to maintain a plurality of different network slices. In addition, these network slices are isolated from each other. Isolation means, for example, preventing data communication of a network slice from causing negative impact on a service of another network slice. The 3GPP system can provide an isolation level between network slices, to restrict a potential network attack to one network slice. For a 3GPP standard, discussion of a network slice selection solution is started, and it is initially proposed that a common-control panel network function (Common-CP Network Function) network element performs network slice selection, but an instance of how to select a network slice is not considered.

A tenant is an important concept of a service-oriented 5G network. The tenant is one or more network service users who share one group of physical resources and virtual resources. The tenant is a renter of an operator network. For example, an electric power company rents the operator network to deploy a smart metering service, and in this case, the electric power company may be a tenant of the operator. However, numerous tenants have a wide variety of businesses or services (Services). If each service is corresponding to one slice, there are an excessively large quantity of slices, and the slices are not easy to operate, maintain, or manage. US 2013/212285 A1 discloses a mechanism for improving a reliability of a virtual network and resources. At a virtual network operator level, a request for providing resources for the virtual network is sent towards an infrastructure provider level. The request includes an indication regarding a required availability and reliability level which is to be achieved by the resources of the virtual network. At an infrastructure provider level the request is processed in order to determine the required availability and reliability level, and it is checked whether the required availability and reliability level is achievable for the resources to be provided for the virtual network. A result (confirmation or denial) of the check is sent back to the virtual network operator level.

AKIHIKO NAKAO 5GMF / THE UNIVERSITY OF TOKYO JAPAN, "Baseline Document: Application of network softwarization to IMT-2020;IMT-O-028", vol. imt-2020, (20160525), pages 1 - 57, ITU-T DRAFT; STUDY PERIOD 2013-2016; FOCUS GROUP IMT-2020; SERIES IMT-O-028, INTERNATIONAL TELECOMMUNICATION UNION, GENEVA ; CH, URL: https://extranet.itu.int/ITU-T/focusgroups/imt-2020/FG IMT2020 Output Documents/O-028.docx, (20160525) discussed the application of network softwarization to design a system architecture for 5G aiming to support at least the new RAT(s), the evolved LTE, non-3GPP access with minimum access dependencies. One of the requirements being network slicing and support of network slicing.

ETRI, "High-level Functional Architecture for the Network Slicing", vol. SA WG2, no. Sophia Antipolis, FRANCE; 20160411 - 20160415, (20160406), 3GPP DRAFT; S2-1618 3 3 _[REVISED S2-161629] _HIGH-LEVEL FUNCTIONAL ARCHITECTURE FOR THE NETWORK SLICING, 3RD GENERATION PARTNERSHIP PROJECT (3GPP), MOBILE COMPETENCE CENTRE ; 650, ROUTE DES LUCIOLES ; F-, URL: http://www.3gpp.org/ftp/tsg_sa/WG2_Arch/TSGS2_114_Sophia_Antipolis/Docs/, (20160406) discloses a high-level functional architecture for the Network Slicing, which may be used as a basic framework over which the further detailed architectural designs can be built up.

ERICSSON, "Isolation aspects of Network Slicing", vol. SA WG2, no. Sophia Antipolis, FRANCE; 20160411 - 20160415, (20160405), 3GPP DRAFT; S2-161482_SLICE_ISOLATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/tsg_sa/WG2_Arch/TSGS2_114_Sophia_Antipolis/Docs/, (20160405) discloses the isolation aspects of Network Slicing and proposes isolation aspects to be considered.

### SUMMARY

The present invention provides a network slice management method a first management unit and a second management unit, to resolve an existing problem that a network slice is not easy to manage.

The invention is defined by the appended claims. In the following, parts of the description and drawings referring to embodiments which are not covered by the claims are not presented as embodiments of the invention, but as examples useful for understanding the invention. According to one aspect, an embodiment of the present invention provides a network slice management method. The method includes: obtaining, by a first management unit, isolation-sharing requirement information of a network slice or first indication information, where the first indication information is used to obtain the isolation-sharing requirement information of the network slice; and sending, by the first management unit, a network slice management request message to a second management unit, where the network slice management request message carries the isolation-sharing requirement information of the network slice or the first indication information, and the network slice management request message is used to instruct the second management unit to select, create, configure, or request to configure the network slice. In this embodiment of the present invention, because the network slice management request message sent by the first management unit to the second management unit carries the isolation-sharing requirement information of the network slice or the indication information of the isolation-sharing requirement information of the network slice, the second management unit may select, create, or configure the network slice based on the isolation-sharing requirement information of the network slice, or request, based on the isolation-sharing requirement information of the network slice, to configure the network slice. The network slice may be a shared network slice or an exclusive network slice. It can be learned that the solution in this embodiment of the present invention facilitates network slice management, and is beneficial to resource saving.

The first management unit obtains the isolation-sharing requirement information of the network slice or the first indication information in the following manner: The first management unit receives a service request message, where the service request message carries isolation-sharing requirement information of a service; or the service request message carries second indication information, the second indication information is used to obtain a service descriptor, and the service descriptor includes the isolation-sharing requirement information of the service; and the first management unit determines the isolation-sharing level of the network slice based on the isolation-sharing requirement information of the service, where the network slice is used to provide the service.

In this embodiment of the present invention, the first management unit determines, based on the isolation-sharing requirement information of the service, the isolation-sharing requirement information of the network slice that carries the service, so that the network slice meets an isolation requirement of the service when the second management unit can select, create, or configure the network slice based on the isolation-sharing requirement information of the network slice, or request, based on the isolation-sharing requirement information of the network slice, to configure the network slice.

In a possible implementation, the isolation-sharing requirement information of the network slice may carry isolation-sharing requirement information of a network slice component, or the network slice management request message may further carry the isolation-sharing requirement information of the network slice component, or the first indication information may be further used to obtain the isolation-sharing requirement information of the network slice component; and the network slice management request message may be further used to instruct the second management unit to select, request, configure, or request to configure the network slice component, where the network slice includes at least one network slice component.

In this embodiment of the present invention, the second management unit may select, request, or configure the network slice component based on the isolation-sharing requirement information of the network slice component, or request, based on the isolation-sharing requirement information of the network slice component, to configure the network slice component. The network slice component is specifically a shared network slice component or an exclusive network slice component.

In a possible implementation, the service request message may further carry isolation-sharing requirement information of a service component, or the service descriptor may further include the isolation-sharing requirement information of the service component, where the service includes at least one service component; and the first management unit may further determine the isolation-sharing requirement information of the network slice component based on the isolation-sharing requirement information of the service component, where the network slice component is used to carry the service component.

In this embodiment of the present invention, the first management unit determines, based on isolation-sharing requirement information of at least one service component, isolation-sharing requirement information of a network slice component that carries the at least one service component, so that the network slice component meets an isolation requirement of the service component when the second management unit can select, request, or configure the network slice component based on the isolation-sharing requirement information of the network slice component, or request, based on the isolation-sharing requirement information of the network slice component, to configure the network slice component.

In a possible implementation, the first indication information is an identifier of a network slice descriptor or network slice requirement information, the network slice requirement information is used to obtain the network slice descriptor, and the network slice descriptor includes the isolation-sharing requirement information of the network slice.

In this embodiment of the present invention, the network slice management request message sent by the first management unit to the second management unit carries the indication information of the isolation-sharing requirement information of the network slice. The indication information is specifically the identifier of the network slice descriptor or the network slice requirement information. In this manner, a network transmission resource can be saved.

In a possible implementation, the network slice descriptor may further include the isolation-sharing requirement information of the network slice component.

In this embodiment of the present invention, the network slice management request message sent by the first management unit to the second management unit carries the indication information. The network slice descriptor may be obtained by using the indication information. The network slice descriptor includes not only the isolation-sharing requirement information of the network slice but also the isolation-sharing requirement information of the network slice component. In this manner, a network transmission resource can be saved.

In a possible implementation, the isolation-sharing requirement information of the network slice may include at least one of the following: a service level of a service carried in the network slice, a user level of the network slice, a priority of the network slice, a type of the network slice, an isolation-sharing level of the network slice, Service Level Agreement (Service Level Agreement, SLA) information of the network slice, or key performance indicator (Key Performance Indicator, KPI) information of the network slice.

In this embodiment of the present invention, a plurality of possible forms of the isolation-sharing requirement information of the network slice are provided, and the isolation-sharing requirement information of the network slice may be but is not limited to the isolation-sharing level of the network slice, so that flexibility is high.

In a possible implementation, the isolation-sharing requirement information of the network slice component includes at least one of the following: a service level of a service component carried in the network slice component, a user level of the network slice component, a priority of the network slice component, a type of the network slice component, an isolation-sharing level of the network slice component, SLA information of the network slice component, or KPI information of the network slice component.

In this embodiment of the present invention, a plurality of possibilities of the isolation-sharing requirement information of the network slice component are provided, and the isolation-sharing requirement information of the network slice component may be but is not limited to the isolation-sharing level of the network slice component, so that flexibility is high.

In a possible implementation, the isolation-sharing requirement information of the service includes at least one of the following: a service level of the service, a type of the service, a user level of the service, an isolation-sharing level of the service, SLA information of the service, KPI information of the service, and isolation-sharing requirement information of a network slice required by the service.

In this embodiment of the present invention, a plurality of possibilities of the isolation-sharing requirement information of the service are provided, and the isolation-sharing requirement information of the service may be but is not limited to the isolation-sharing level of the service, so that flexibility is high.

In a possible implementation, the first management unit may determine the isolation-sharing requirement information of the network slice in the following manner: When the isolation-sharing requirement information of the service includes the isolation-sharing requirement information of the network slice required by the service, the first management unit may determine that the isolation-sharing requirement information of the network slice required by the service is the isolation-sharing requirement information of the network slice; or when the isolation-sharing requirement information of the service does not include the isolation-sharing requirement information of the network slice required by the service, the first management unit may determine the isolation-sharing requirement information of the network slice according to a preset rule based on the isolation-sharing requirement information of the service.

In this embodiment of the present invention, the specific manner of determining the isolation-sharing requirement information of the network slice based on the isolation-sharing requirement information of the service is provided, and the manner is highly feasible.

The isolation-sharing level of the network slice includes at least one of the following: sharing, exclusivity, isolation, application isolation, soft isolation, or hard isolation.

In this embodiment of the present invention, specific forms of the isolation-sharing level of the network slice are provided, and the isolation-sharing level of the network slice may be sharing or exclusivity, or may be isolation, application isolation, soft isolation, or hard isolation. Therefore, more bases are provided for the second management unit to select, create, or configure the network slice based on the isolation-sharing requirement information of the network slice, or request, based on the isolation-sharing requirement information of the network slice, to configure the network slice.

In a possible implementation, the isolation-sharing level of the network slice component includes at least one of the following: sharing, exclusivity, isolation, application isolation, soft isolation, or hard isolation.

In this embodiment of the present invention, specific forms of the isolation-sharing level of the network slice component are provided, and the isolation-sharing level of the network slice component may be sharing or exclusivity, or may be isolation, application isolation, soft isolation, or hard isolation. Therefore, more bases are provided for the second management unit to select, request, or configure the network slice component based on the isolation-sharing requirement information of the network slice component, or request, based on the isolation-sharing requirement information of the network slice component, to configure the network slice component.

According to another aspect, an embodiment of the present invention provides another network slice management method. The method includes: receiving, by a second management unit, a network slice management request message from a first management unit, where the network slice management request message carries isolation-sharing requirement information of a network slice or indication information, and the indication information is used to obtain the isolation-sharing requirement information of the network slice; and selecting, creating, or configuring, by the second management unit, the network slice based on the network slice management request message, or requesting, by the second management unit based on the network slice management request message, to configure the network slice.

In this embodiment of the present invention, because the network slice management request message received by the second management unit from the first management unit carries the isolation-sharing requirement information of the network slice or the indication information of the isolation-sharing requirement information of the network slice, the second management unit may select, create, or configure the network slice based on the isolation-sharing requirement information of the network slice, or request, based on the isolation-sharing requirement information of the network slice, to configure the network slice. The network slice is specifically a shared network slice or an exclusive network slice.

In a possible implementation, the isolation-sharing requirement information of the network slice may carry isolation-sharing requirement information of a network slice component, or the network slice management request message may further carry the isolation-sharing requirement information of the network slice component, or the indication information may be further used to obtain the isolation-sharing requirement information of the network slice component; and the network slice management request message may be further used to instruct the second management unit to select, request, configure, or request to configure the network slice component, and the second management unit may select, request, configure, or request to configure the network slice component, where the network slice includes at least one network slice component.

In this embodiment of the present invention, the second management unit may select, request, or configure the network slice component based on the isolation-sharing requirement information of the network slice component, or request, based on the isolation-sharing requirement information of the network slice component, to configure the network slice component. The network slice component is specifically a shared network slice component or an exclusive network slice component.

In a possible implementation, the indication information may be an identifier of a network slice descriptor or network slice requirement information, the network slice requirement information is used to obtain the network slice descriptor, and the network slice descriptor includes the isolation-sharing requirement information of the network slice.

In this embodiment of the present invention, the network slice management request message received by the second management unit from the first management unit carries the indication information of the isolation-sharing requirement information of the network slice. The indication information is specifically the identifier of the network slice descriptor or the network slice requirement information. In this manner, a network transmission resource can be saved.

In a possible implementation, the network slice descriptor may further include the isolation-sharing requirement information of the network slice component.

In this embodiment of the present invention, the network slice management request message received by the second management unit from the first management unit carries the indication information. The network slice descriptor may be obtained by using the indication information. The network slice descriptor includes not only the isolation-sharing requirement information of the network slice but also the isolation-sharing requirement information of the network slice component. In this manner, a network transmission resource can be saved.

In a possible implementation, the isolation-sharing requirement information of the network slice may include at least one of the following: a service level of a service carried in the network slice, a user level of the network slice, a priority of the network slice, a type of the network slice, an isolation-sharing level of the network slice, SLA information of the network slice, or KPI information of the network slice.

In this embodiment of the present invention, a plurality of possibilities of the isolation-sharing requirement information of the network slice are provided, and the isolation-sharing requirement information of the network slice may be but is not limited to the isolation-sharing level of the network slice, so that flexibility is high.

In a possible implementation, the isolation-sharing requirement information of the network slice component may include at least one of the following: a service level of a service component carried in the network slice component, a user level of the network slice component, a priority of the network slice component, a type of the network slice component, an isolation-sharing level of the network slice component, SLA information of the network slice component, or KPI information of the network slice component.

In this embodiment of the present invention, a plurality of possibilities of the isolation-sharing requirement information of the network slice component are provided, and the isolation-sharing requirement information of the network slice component may be but is not limited to the isolation-sharing level of the network slice component, so that flexibility is high.

In a possible implementation, the second management unit may select, create, configure, or request to configure the network slice in the following manner: When the isolation-sharing requirement information of the network slice includes the isolation-sharing level of the network slice, the second management unit may select, create, or configure the network slice based on the isolation-sharing level of the network slice, or request, based on the isolation-sharing level of the network slice, to configure the network slice; or when the isolation-sharing requirement information of the network slice does not include the isolation-sharing level of the network slice, the second management unit may determine the isolation-sharing level of the network slice based on the isolation-sharing requirement information of the network slice, and select, create, or configure the network slice based on the isolation-sharing level of the network slice, or request, based on the isolation-sharing level of the network slice, to configure the network slice.

In this embodiment of the present invention, the specific implementation of selecting, creating, or configuring the network slice based on the isolation-sharing requirement information of the network slice, or requesting, based on the isolation-sharing requirement information of the network slice, to configure the network slice is provided, and the implementation is highly feasible.

In a possible implementation, when the isolation-sharing level of the network slice is sharing, the second management unit may select an existing network slice whose isolation-sharing level is sharing; or the second management unit may select a network slice descriptor of a network slice whose isolation-sharing level is sharing, and create or configure the network slice based on the network slice descriptor; or the second management unit may request to allocate a first network resource or a first virtual resource, where the first network resource or the first virtual resource is used to create or configure the network slice; or when the isolation-sharing level of the network slice is isolation or exclusivity, the second management unit may create the network slice; or the second management unit may configure the network slice to be isolated or exclusive; or the second management unit may request to allocate a second network resource or a second virtual resource, where the second network resource or the second virtual resource is used to create or configure the network slice.

In this embodiment of the present invention, the specific implementation of selecting, creating, or configuring the network slice based on the isolation-sharing level of the network slice, or requesting, based on the isolation-sharing level of the network slice, to configure the network slice is provided, and the implementation is highly feasible.

In a possible implementation, the second management unit may select, create, configure, or request to configure the network slice component in the following manner: When the isolation-sharing requirement information of the network slice component includes the isolation-sharing level of the network slice component, the second management unit may select, request, or configure the network slice component based on the isolation-sharing level of the network slice component, or request, based on the isolation-sharing level of the network slice component, to configure the network slice component; or when the isolation-sharing requirement information of the network slice component does not include the isolation-sharing level of the network slice component, the second management unit may determine the isolation-sharing level of the network slice component based on the isolation-sharing requirement information of the network slice component, and select, request, or configure the network slice component based on the isolation-sharing level of the network slice component, or request, based on the isolation-sharing level of the network slice component, to configure the network slice component.

In this embodiment of the present invention, the specific implementation of selecting, requesting, or configuring the network slice component based on the isolation-sharing requirement information of the network slice component, or requesting, based on the isolation-sharing requirement information of the network slice component, to configure the network slice component is provided, and the implementation is highly feasible.

In a possible implementation, when the isolation-sharing level of the network slice component is sharing, the second management unit may select an existing network slice component whose isolation-sharing level is sharing; or the second management unit may request or configure a network slice component whose isolation-sharing level is sharing; or the second management unit may select a network slice component descriptor of a network slice component whose isolation-sharing level is sharing, and create or configure the network slice component based on the network slice component descriptor; or the second management unit may request to allocate a third network resource or a third virtual resource, where the third network resource or the third virtual resource is used to create or configure the network slice component; or when the isolation-sharing level of the network slice component is isolation or exclusivity, the second management unit may create the network slice component; or the second management unit may request or configure a network slice component whose isolation-sharing level is isolation or exclusivity; or the second management unit may configure the network slice component to be isolated or exclusive; or the second management unit may select a network slice component descriptor of a network slice component whose isolation-sharing level is isolation or exclusivity, and create or configure the network slice component based on the network slice component descriptor; or the second management unit may request to allocate a fourth network resource or a fourth virtual resource, where the fourth network resource or the fourth virtual resource is used to create or configure the network slice component.

In this embodiment of the present invention, the specific implementation of selecting, requesting, or configuring the network slice component based on the isolation-sharing level of the network slice component, or requesting, based on the isolation-sharing level of the network slice component, to configure the network slice component is provided, and the implementation is highly feasible.

In a possible implementation, the network slice component includes at least one of the following: a sub network slice, a network, a subnetwork, a network function, a network element, or a network service.

In this embodiment of the present invention, a plurality of possible forms of the network slice component are provided, so that coverage is extensive.

According to still another aspect, an embodiment of the present invention provides a first management unit. As a network slice management apparatus, the first management unit may implement a function executed by the first management unit in the foregoing method example. The function may be implemented by hardware, or may be implemented by executing corresponding software by hardware. The hardware or the software includes one or more modules corresponding to the function.

In a possible design, a structure of the first management unit includes a processor and a communications interface. The processor is configured to support the first management unit in performing the corresponding function in the foregoing method. The communications interface is configured to support communication between the first management unit and another network element. The first management unit may further include a memory. The memory is configured to be coupled to the processor, and stores a program instruction and data that are necessary for the first management unit.

According to still another aspect, an embodiment of the present invention provides a second management unit. As another network slice management apparatus, the second management unit may implement a function executed by the second management unit in the foregoing method embodiment. The function may be implemented by hardware, or may be implemented by executing corresponding software by hardware. The hardware or the software includes one or more modules corresponding to the function.

In a possible design, a structure of the second management unit includes a processor and a communications interface. The processor is configured to support the second management unit in performing the corresponding function in the foregoing method. The communications interface is configured to support communication between the second management unit and another network element. The second management unit may further include a memory. The memory is configured to be coupled to the processor, and stores a program instruction and data that are necessary for the second management unit.

According to still another aspect, an embodiment of the present invention provides a communications system. The system includes the first management unit and the second management unit described in the foregoing aspects.

According to yet another aspect, an embodiment of the present invention provides a computer storage medium, configured to store a computer software instruction used by the foregoing first management unit, where the computer software instruction includes a program designed for executing the foregoing aspect.

According to yet another aspect, an embodiment of the present invention provides a computer storage medium, configured to store a computer software instruction used by the foregoing second management unit, where the computer software instruction includes a program designed for executing the foregoing aspect.

Compared with the prior art, in the solutions provided in the embodiments of the present invention, because the network slice management request message sent by the first management unit to the second management unit carries the isolation-sharing requirement information of the network slice or the indication information of the isolation-sharing requirement information of the network slice, the second management unit may select, create, or configure the network slice based on the isolation-sharing requirement information of the network slice, or request, based on the isolation-sharing requirement information of the network slice, to configure the network slice. The network slice is specifically a shared network slice or an exclusive network slice. Therefore, a specific solution of choosing to provide a shared network slice or an exclusive network slice for a tenant is provided.

### BRIEF DESCRIPTION OF DRAWINGS

FIG. 1 is a schematic diagram of a network slice management framework;
FIG. 2a is a schematic communication diagram of a network slice management method according to an embodiment of the present invention;
FIG. 2b is a schematic communication diagram of another network slice management method according to an embodiment of the present invention;
FIG. 3 is a schematic communication diagram of still another network slice management method according to an embodiment of the present invention;
FIG. 4 is a schematic communication diagram of yet another network slice management method according to an embodiment of the present invention;
FIG. 5 is a schematic structural diagram of a first management unit according to an embodiment of the present invention;
FIG. 6 is a schematic structural diagram of another first management unit according to an embodiment of the present invention;
FIG. 7 is a schematic structural diagram of a second management unit according to an embodiment of the present invention; and
FIG. 8 is a schematic structural diagram of another second management unit according to an embodiment of the present invention.

### DESCRIPTION OF EMBODIMENTS

To make the objectives, technical solutions, and advantages of the embodiments of the present invention clearer, the following describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

It should be understood that when ordinal numbers such as "first" and "second" are mentioned in the embodiments of the present invention, the ordinal numbers are merely used for distinguishing unless the ordinal numbers definitely express a sequence based on the context.

In the embodiments of the present invention, a parameter "whether sharing is allowed" can be set in network slice instance information. The parameter "whether a network slice is shared" defines whether the network slice can be simultaneously used by a plurality of tenants (Tenant) or can simultaneously support a plurality of businesses or services (Services). Specifically, the parameter "whether a network slice is shared" may be embodied in a service descriptor. The service descriptor is a template that guides deployment and maintenance of a service. A feature such as a service type or an SLA requirement can be correspondingly converted, in a mapping manner defined in a policy rule, into a requirement indicating whether the network slice is shared. For example, when the service type is a dedicated network, the service requests to exclusively occupy the network slice; and when an SLA or reliability requirement of the service is highest, the service requests to exclusively occupy the network slice. Alternatively, the parameter "whether a network slice is shared" can be directly set in the service descriptor, to define whether the service requests to exclusively occupy the network slice.

In the embodiments of the present invention, the parameter "whether a network slice is shared" or a parameter for indicating whether the network slice is shared can be carried in an interface operation. The interface operation includes creation, configuration, modification, update, or query of a network slice instance, for example, a service orchestrator (Service Orchestrator, SO) requests a resource orchestrator or a network orchestrator (Resource/network Orchestrator, RO/NO) to create, configure, modify, update, or query the network slice instance; and includes creation, configuration, modification, update, or query of a network slice template, for example, a business support system (Business Support System, BSS)/operations support system (Operations Support System, OSS) requests an orchestrator (Orchestrator) to create, configure, modify, update, or query the network slice template.

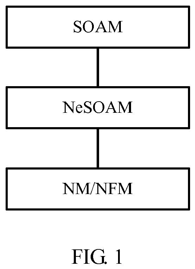

FIG. 1 is a schematic diagram of a network slice management framework. Referring to FIG. 1, the framework mainly relates to a service orchestration and management (Service Orchestration and Management, SOAM) unit, a network slice orchestration and management (Network Slice Orchestration and Management, NeSOAM) unit, and a network/network function management (Network/Network Function Management, NM/NFM) unit. The SOAM unit is responsible for service management and orchestration, including service aggregation, service life cycle management, service performance monitoring, service fault information monitoring, service configuration management, conversion or mapping from a service need to a network need, and the like. The NeSOAM unit is responsible for network slice management and orchestration, including network slice life cycle management, network slice performance management, network slice fault information monitoring, network slice configuration, mapping from a network slice to a network function or a network resource, and the like. The NM/NFM unit is responsible for network function or network management, including network function configuration, performance management, fault management, and the like.

The network slice management method provided in the embodiments of the present invention is based on the framework shown in FIG. 1. The SOAM unit and the NeSOAM unit may be located in any network element in the OSS, the SO, the NO, the NM unit, a network functions virtualization orchestration (Network Functions Virtualization Orchestration, NFVO) unit, or a network service orchestration (Network Service Orchestration, NSO) unit. The SOAM unit and the NeSOAM unit may be located in two different network elements. For example, the SOAM unit is located in the SO and the NeSOAM unit is located in the NO. The SOAM unit and the NeSOAM unit may alternatively be located in a same network element. For example, both the SOAM unit and the NeSOAM unit are located in the NO.

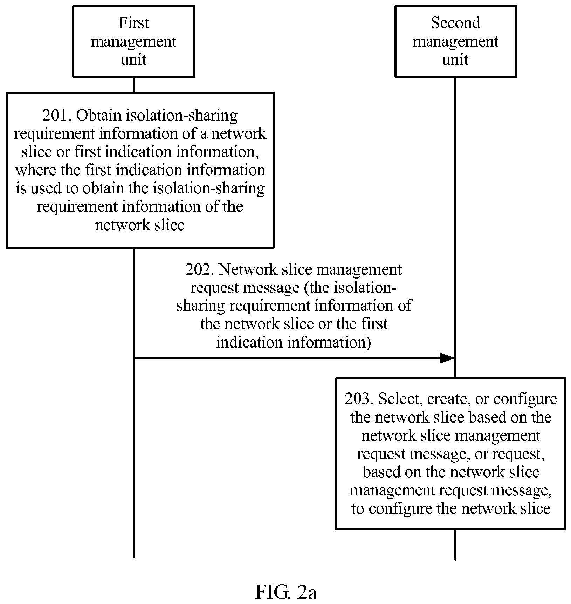

FIG. 2a is a schematic communication diagram of a network slice management method according to an embodiment of the present invention. The method may be based on the framework shown in FIG. 1. A first management unit first obtains isolation-sharing requirement information of a network slice or first indication information, and then sends the isolation-sharing requirement information of the network slice or the first indication information to a second management unit. The second management unit manages the network slice based on the isolation-sharing requirement information of the network slice or the first indication information. Referring to FIG. 2a, the method includes the following steps.

Step 201, a first management unit obtains isolation-sharing requirement information of a network slice or first indication information, where the first indication information is used to obtain the isolation-sharing requirement information of the network slice.

In this embodiment of the present invention, the first management unit may directly obtain the isolation-sharing requirement information of the network slice. For example, the first management unit may receive the isolation-sharing requirement information that is of the network slice and that is sent by another network element. Alternatively, the first management unit may indirectly obtain the isolation-sharing requirement information of the network slice. For example, the first management unit may receive specific information sent by another network element, and then the first management unit may determine the isolation-sharing requirement information of the network slice based on the specific information. In the latter case, the first management unit may directly determine the isolation-sharing requirement information of the network slice based on the specific information; or the first management unit may first determine a network slice descriptor based on the specific information, and then obtain the isolation-sharing requirement information of the network slice based on the network slice descriptor.

The first management unit may be the SOAM unit in FIG. 1, and the first management unit is responsible for service management and orchestration. The service may be but is not limited to a telecommunication service. The management may include life cycle management, configuration management, service aggregation management, performance management, fault management, and the like, for example, instantiation, update, deletion, and capacity expansion/shrinkage.

In an example, the first management unit may obtain the isolation-sharingrequirement information of the network slice or the first indication information in the following manner: The first management unit receives a service request message, where the service request message carries isolation-sharing requirement information of a service; or the service request message carries second indication information, the second indication information is used to obtain a service descriptor, and the service descriptor includes the isolation-sharing requirement information of the service; and the first management unit determines the isolation-sharing requirement information of the network slice based on the isolation-sharing requirement information of the service, where the network slice is used to provide the service.

The isolation-sharing requirement information of the network slice may include at least one of the following: a service level of a service carried in the network slice, a user level of the network slice, a priority of the network slice, a type of the network slice, an isolation-sharing level of the network slice, SLA information of the network slice, or key performance indicator (Key Performance Indicator, KPI) information of the network slice. The isolation-sharing level of the network slice may include at least one of the following: sharing, exclusivity, isolation, application isolation, soft isolation, or hard isolation.

In an example, the isolation-sharing requirement information of the network slice may carry isolation-sharing requirement information of a network slice component, or a network slice management request message may further carry the isolation-sharing requirement information of the network slice component, or the first indication information may be further used to obtain the isolation-sharing requirement information of the network slice component. Further, the network slice management request message may be further used to instruct the second management unit to select, request, configure, or request to configure the network slice component. The network slice includes at least one network slice component.

The network slice component may include at least one of the following: a sub network slice, a network, a subnetwork, a network function, a network element, or a network service.

The isolation-sharing requirement information of the network slice component may include at least one of the following: a service level of a service component carried in the network slice component, a user level of the network slice component, a priority of the network slice component, a type of the network slice component, an isolation-sharing level of the network slice component, SLA information of the network slice component, or KPI information of the network slice component. The isolation-sharing level of the network slice component may include at least one of the following: sharing, exclusivity, isolation, application isolation, soft isolation, or hard isolation.

In an example, the service request message may further carry isolation-sharing requirement information of a service component, or the service descriptor may further include the isolation-sharing requirement information of the service component. The service includes at least one service component. Further, the first management unit may determine the isolation-sharing requirement information of the network slice component based on the isolation-sharing requirement information of the service component. The network slice component is used to carry the service component.

The isolation-sharing requirement information of the service component may include at least one of the following: a service level of the service component, a type of the service component, a user level of the service component, an isolation-sharing level of the service component, SLA information of the service component, KPI information of the service component, or isolation-sharing requirement information of a network slice component required by the service component.

In an example, the first indication information may be an identifier of a network slice descriptor or network slice requirement information, the network slice requirement information is used to obtain the network slice descriptor, and the network slice descriptor includes the isolation-sharing requirement information of the network slice. Optionally, the network slice descriptor may further include the isolation-sharing requirement information of the network slice component.

Further, the network slice descriptor may further include deployment information of the network slice, such as a network function type and topology information of a connection between network functions.

In an example, the isolation-sharing requirement information of the service includes at least one of the following: a service level of the service, a type of the service, a user level of the service, an isolation-sharing level of the service, Service Level Agreement SLA information of the service, key performance indicator KPI information of the service, and isolation-sharing requirement information of a network slice required by the service.

In an example, when the isolation-sharing requirement information of the service includes the isolation-sharing requirement information of the network slice required by the service, the first management unit may determine that the isolation-sharing requirement information of the network slice required by the service is the isolation-sharing requirement information of the network slice; or when the isolation-sharing requirement information of the service does not include the isolation-sharing requirement information of the network slice required by the service, the first management unit may determine the isolation-sharing requirement information of the network slice according to a preset rule based on the isolation-sharing requirement information of the service.

Step 202, the first management unit sends a network slice management request message to a second management unit, where the network slice management request message carries the isolation-sharing requirement information of the network slice or the first indication information. The second management unit may be the NeSOAM unit in FIG. 1, and the second management unit is responsible for network slice management and orchestration. The management may include life cycle management, configuration management, fault management, performance management, and the like, for example, instantiation, update, deletion, and capacity expansion/shrinkage. The second management unit may be in an SO or an NO.

Step 203, the second management unit selects, creates, or configures the network slice based on the network slice management request message, or requests, based on the network slice management request message, to configure the network slice.

In this embodiment of the present invention, the first management unit may first obtain the isolation-sharing requirement information of the network slice or the first indication information used to obtain the isolation-sharing requirement information of the network slice, and then send the network slice management request message to the second management unit. The network slice management request message carries the isolation-sharing requirement information of the network slice or the first indication information. The second management unit selects, creates, or configures the network slice based on the network slice management request message, or requests, based on the network slice management request message, to configure the network slice. Therefore, the bearer network slice is managed based on an isolation requirement of the service. In an example, the second management unit may select, request, configure, or request to configure the network slice component. The network slice includes at least one network slice component.

In an example, the second management unit may select, create, configure, or request to configure the network slice in the following manner: When the isolation-sharing requirement information of the network slice includes the isolation-sharing level of the network slice, the second management unit may select, create, or configure the network slice based on the isolation-sharing level of the network slice, or request, based on the isolation-sharing level of the network slice, to configure the network slice; or when the isolation-sharing requirement information of the network slice does not include the isolation-sharing level of the network slice, the second management unit determines the isolation-sharing level of the network slice based on the isolation-sharing requirement information of the network slice, and selects, creates, or configures the network slice based on the isolation-sharing level of the network slice, or requests, based on the isolation-sharing level of the network slice, to configure the network slice.

In a possible implementation, when the isolation-sharing level of the network slice is sharing, the second management unit may select an existing network slice whose isolation-sharing level is sharing; or the second management unit may select a network slice descriptor of a network slice whose isolation-sharing level is sharing, and create or configure the network slice based on the network slice descriptor; or the second management unit may request to allocate a first network resource or a first virtual resource, where the first network resource or the first virtual resource is used to create or configure the network slice; or when the isolation-sharing level of the network slice is isolation or exclusivity, the second management unit may create the network slice; or the second management unit may configure the network slice to be isolated or exclusive; or the second management unit may request to allocate a second network resource or a second virtual resource, where the second network resource or the second virtual resource is used to create or configure the network slice.

In an example, the second management unit may select, create, configure, or request to configure the network slice component in the following manner: When the isolation-sharing requirement information of the network slice component includes the isolation-sharing level of the network slice component, the second management unit may select, request, or configure the network slice component based on the isolation-sharing level of the network slice component, or request, based on the isolation-sharing level of the network slice component, to configure the network slice component; or when the isolation-sharing requirement information of the network slice component does not include the isolation-sharing level of the network slice component, the second management unit may determine the isolation-sharing level of the network slice component based on the isolation-sharing requirement information of the network slice component, and select, request, or configure the network slice component based on the isolation-sharing level of the network slice component, or request, based on the isolation-sharing level of the network slice component, to configure the network slice component.

In a possible implementation, when the isolation-sharing level of the network slice component is sharing, the second management unit may select an existing network slice component whose isolation-sharing level is sharing; or the second management unit may request or configure a network slice component whose isolation-sharing level is sharing; or the second management unit may select a network slice component descriptor of a network slice component whose isolation-sharing level is sharing, and create or configure the network slice component based on the network slice component descriptor; or the second management unit may request to allocate a third network resource or a third virtual resource, where the third network resource or the third virtual resource is used to create or configure the network slice component; or when the isolation-sharing level of the network slice component is isolation or exclusivity, the second management unit may create the network slice component; or the second management unit may request or configure a network slice component whose isolation-sharing level is isolation or exclusivity; or the second management unit may configure the network slice component to be isolated or exclusive; or the second management unit may select a network slice component descriptor of a network slice component whose isolation-sharing level is isolation or exclusivity, and create or configure the network slice component based on the network slice component descriptor; or the second management unit may request to allocate a fourth network resource or a fourth virtual resource, where the fourth network resource or the fourth virtual resource is used to create or configure the network slice component.

The first network resource or the first virtual resource is a resource that can be shared by a plurality of network slices. The second network resource or the second virtual resource is a resource dedicated to a specific network slice. The third network resource or the third virtual resource is a resource that can be shared by a plurality of network slice components. The fourth network resource or the fourth virtual resource is a resource dedicated to a specific network slice component.

In this embodiment of the present invention, after obtaining the isolation-sharing requirement information of the network slice or the first indication information, the first management unit may send the network slice management request message to the second management unit, so that the second management unit can select, create, configure, or request to configure the network slice. It can be learned that, in the solution in this embodiment of the present invention, a shared network slice or an exclusive network slice can be provided for a tenant, to facilitate management and save a resource.

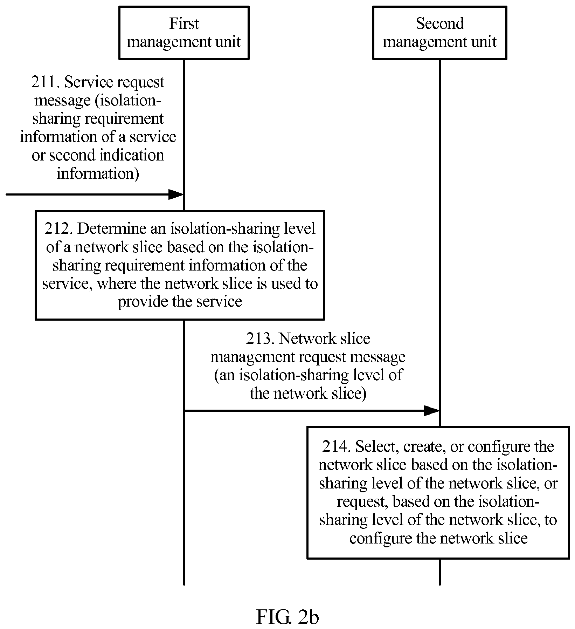

FIG. 2b is a schematic communication diagram of another network slice management method according to an embodiment of the present invention. For content in the method shown in FIG. 2b that is the same as or similar to content in the method shown in FIG. 2a, refer to detailed descriptions in FIG. 2a. Details are not described herein again. The method may be based on the framework shown in FIG. 1. A first management unit first receives a service request message, determines an isolation-sharing level of a network slice based on the service request message, and then sends the isolation-sharing level of the network slice to a second management unit. The second management unit manages the network slice based on the isolation-sharing level of the network slice. Referring to FIG. 2b, the method includes the following steps.

Step 211, a first management unit receives a service request message, where the service request message carries isolation-sharing requirement information of a service; or the service request message carries second indication information, the second indication information is used to obtain a service descriptor, and the service descriptor includes the isolation-sharing requirement information of the service.

The first management unit may be the SOAM unit in FIG. 1, and the first management unit is responsible for service management and orchestration. The service may be but is not limited to a telecommunication service. The management may include life cycle management, configuration management, service aggregation management, performance management, fault management, and the like, for example, instantiation, update, deletion, and capacity expansion/shrinkage.

In a specific application scenario, the first management unit may receive a service request message sent by a BSS, an OSS, or a customer (customer), the customer may be specifically a tenant, namely, a third-party enterprise, and the first management unit may be in an SO or an NO.

In another specific application scenario, the first management unit may be a BSS, an OSS, or a customer, and the second management unit may be an SO or an NO. In this case, a network slice management request message may be a service request message.

In this embodiment of the present invention, for related descriptions of isolation-sharing requirement information of a network slice, isolation-sharing requirement information of a network slice component, the isolation-sharing requirement information of the service, and isolation-sharing requirement information of a service component, refer to the detailed descriptions in the step 201 in FIG. 2a. Details are not described herein again. In this embodiment of the present invention, the second indication information may be referred to as descriptor information of the service. The descriptor information of the service may be a descriptor identifier, name, or the like of the service, or may be descriptor indication information such as an SLA of the service, the service, and/or a type of the network slice. A corresponding descriptor may be identified based on the descriptor indication information. The descriptor (Descriptor) is used to automatically deploy a service, and may also be referred to as a template (Template), a blueprint (Blueprint), or the like.

In an example, the service request message further carries the isolation-sharing requirement information of the service component, or the service descriptor further includes the isolation-sharing requirement information of the service component. The service includes at least one service component.

In an example, the service request message further carries isolation-sharing requirement information of at least one service component; or the service descriptor further includes the isolation-sharing requirement information of the at least one service component; or the descriptor information of the service further includes descriptor information of the at least one service component; or the service descriptor further includes a descriptor of the at least one service component, and the descriptor of the service component includes the isolation-sharing requirement information of the service component. The service includes at least one service component.

In this embodiment of the present invention, one network slice includes one or more network slice components. The network slice component includes at least one of the following: a sub network slice, a network, a subnetwork, a network function, a network element, or a network service.

In this embodiment of the present invention, the descriptor information of the service component may be a descriptor identifier, name, or the like of the service component. Alternatively, the descriptor information of the service component may be descriptor indication information of the service component, such as an SLA of the service component, the service component, and/or a type of the network slice component. A corresponding descriptor may be identified based on the descriptor indication information.

Step 212, the first management unit determines an isolation-sharing level of a network slice based on the isolation-sharing requirement information of the service, where the network slice is used to provide the service.

The isolation-sharing level of the network slice is one of types of isolation-sharing requirement information of the network slice. The isolation-sharing level of the network slice may include at least one of the following: sharing, exclusivity, isolation, application isolation, soft isolation, or hard isolation.

The isolation can be subdivided into the application isolation, the soft isolation, and the hard isolation. The isolation indicates that no attention is paid to a degree of isolation, and the isolation may be any one of the application isolation, the soft isolation, and the hard isolation. The application isolation indicates that two network slices use a same resource, and the resource includes a logical resource and a physical resource, but different network parameters or application parameters are configured, to form the two network slices. The soft isolation indicates that two network slices use a same physical resource, but use different logical resources. For example, the two network slices are separately implemented by two virtual machines that are virtualized on one host. The host is a physical resource, and the virtual machines are logical resources. The hard isolation indicates that two network slices use different physical resources. For example, the two network slices are separately implemented by two hosts or by virtual machines on two hosts.

In this embodiment of the present invention, when the isolation-sharing requirement information of the service includes isolation-sharing requirement information of a network slice required by the service, it is determined that the isolation-sharing requirement information of the network slice required by the service is the isolation-sharing requirement information of the network slice; or when the isolation-sharing requirement information of the service does not include the isolation-sharing requirement information of the network slice required by the service, the isolation-sharing requirement information of the network slice is determined according to a preset rule based on the isolation-sharing requirement information of the service.

That the isolation-sharing requirement information of the network slice is determined according to a preset rule may specifically include the following two manners: The isolation-sharing requirement information of the network slice is obtained through mapping based on the isolation-sharing requirement information of the service and a preconfigured mapping relationship; or the isolation-sharing requirement information of the network slice is calculated in real time based on the isolation-sharing requirement information of the service and a preconfigured algorithm.

In an example, when in the step 211, the isolation-sharing requirement information that is of the service and that is obtained by the first management unit includes a service level of the service, the isolation-sharing level of the network slice may be obtained through mapping based on the service level and a preconfigured mapping relationship. For example, when the service level is high, the isolation-sharing level of the network slice is exclusivity; or when the service level is low, the isolation-sharing level of the network slice is sharing.

In another example, when the isolation-sharing requirement information of the service includes a type of the service, the isolation-sharing level of the network slice may be obtained through mapping based on the type of the service and a preconfigured mapping relationship. For example, when the type of the service is an augmented reality (Augmented Reality, AR) service, a virtual reality (Virtual Reality, VR) service, or a national security service, the isolation-sharing level of the network slice is exclusivity; or when the type of the service is an Internet of Things (Internet of Things, IoT) service, the isolation-sharing level of the network slice is sharing.

In another example, when the isolation-sharing requirement information of the service includes a user level of the service, the isolation-sharing level of the network slice may be obtained through mapping based on the user level of the service and a preconfigured mapping relationship. A user of the service is a tenant. For example, for a gold user, the isolation-sharing level of the network slice is exclusivity; and for a common user, the isolation-sharing level of the network slice is sharing.

In another example, when the isolation-sharing requirement information of the service includes an isolation-sharing level of the service, the isolation-sharing level of the network slice may be obtained through mapping based on the isolation-sharing level of the service and a preconfigured mapping relationship. For example, when the isolation-sharing level of the service is high or isolation, the isolation-sharing level of the network slice is exclusivity; or when the isolation-sharing level of the service is low or sharing, the isolation-sharing level of the network slice is sharing.

In another example, when the isolation-sharing requirement information of the service includes SLA information of the service or KPI information of the service, the isolation-sharing level of the network slice may be obtained through mapping based on the SLA information of the service or the KPI information of the service and based on a preconfigured mapping relationship. For example, when the SLA information of the service or the KPI information of the service is a low latency and a high throughput, the isolation-sharing level of the network slice is exclusivity; or when the SLA information of the service or the KPI information of the service does not indicate a low-latency requirement or a high-throughput requirement, the isolation-sharing level of the network slice is sharing.

In this embodiment of the present invention, the isolation-sharing requirement information of the service is isolation-sharing requirement information considered at a service level, and the isolation-sharing requirement information of the network slice required by the service is isolation-sharing requirement information considered at a network slice level.

In an example, when the isolation-sharing requirement information of the service includes the isolation-sharing requirement information of the network slice required by the service, the isolation-sharing level of the network slice may be obtained through mapping based on the isolation-sharing requirement information of the network slice and a preconfigured mapping relationship. For example, when the isolation-sharing requirement information of the network slice is a network slice of a dedicated network, the isolation-sharing level of the network slice is exclusivity; or when the isolation-sharing requirement information of the network slice is a network slice of a non-dedicated network, the isolation-sharing level of the network slice is sharing.

In an example, when in the step 211, the service request message received by the first management unit further carries isolation-sharing requirement information of at least one service component, in the step 212, the first management unit further needs to determine, based on the isolation-sharing requirement information of the at least one service component, an isolation-sharing level of a network slice component that carries the at least one service component.

The isolation-sharing level of the network slice component is one of types of isolation-sharing requirement information of the network slice component. The isolation-sharing requirement information of the network slice component includes at least one piece of the following information: a service level of a service component carried in the network slice component, a user level of the network slice component, a priority of the network slice component, a type of the network slice component, an isolation-sharing level of the network slice component, SLA information of the network slice component, or KPI information of the network slice component. The isolation-sharing level of the network slice component may include at least one of the following: sharing, exclusivity, isolation, application isolation, soft isolation, or hard isolation.

In this embodiment of the present invention, the isolation-sharing requirement information of the network slice component may be determined in a manner that is the same as a manner of determining the isolation-sharing requirement information of the network slice. When the isolation-sharing requirement information of the service component includes isolation-sharing requirement information of a network slice component required by the service component and the isolation-sharing requirement information of the network slice component is an isolation-sharing level of the network slice component, the isolation-sharing level of the network slice component required by the service component is directly determined as the isolation-sharing level of the network slice component that carries the service component; or when the isolation-sharing requirement information of the service component does not include the isolation-sharing requirement information of the network slice component required by the service component, the isolation-sharing level of the network slice component that carries the service component is determined according to a preset rule based on the isolation-sharing requirement information of the service component.

Step 213, the first management unit sends a network slice management request message to a second management unit, where the network slice management request message carries the isolation-sharing level of the network slice.

The second management unit may be the NeSOAM unit in FIG. 1, and the second management unit is responsible for network slice management and orchestration. The management may include life cycle management, configuration management, fault management, performance management, and the like, for example, instantiation, update, deletion, and capacity expansion/shrinkage. The second management unit may be in the SO or the NO.

In a specific application scenario, when both the first management unit and the second management unit are in the NO, the network slice management request message is an internal message of a network element.

In an example, when in the step 212, the first management unit further determines, based on the isolation-sharing requirement information of the at least one service component, the isolation-sharing level of the network slice component that carries the at least one service component, in the step 213, the network slice management request message sent by the first management unit to the second management unit further carries the isolation-sharing level of the network slice component that carries the at least one service component.

Step 214, the second management unit selects, creates, or configures the network slice based on the isolation-sharing level of the network slice, or requests, based on the isolation-sharing level of the network slice, to configure the network slice.

In this embodiment of the present invention, the isolation-sharing level of the network slice indicates a different degree of isolation of the network slice. When the isolation-sharing level of the network slice is isolation, it indicates that a network slice A needs to be isolated from another network slice B, for example, a virtual machine A and a virtual machine B need to be on different hosts; or when the isolation-sharing level of the network slice is exclusivity, it indicates that a network slice A can be used only by a tenant B, for example, a virtual machine A can be used only by a meter user.

In an example, when the isolation-sharing level of the network slice is sharing, the second management unit selects an existing network slice whose isolation-sharing level is sharing; or the second management unit selects a network slice descriptor of a network slice whose isolation-sharing level is sharing, and creates or configures the network slice based on the network slice descriptor; or the second management unit requests to allocate a first network resource or a first virtual resource, where the first network resource or the first virtual resource is used to create or configure the network slice. The first network resource or the first virtual resource is a resource that can be shared by a plurality of network slices.

In an example, when the isolation-sharing level of the network slice is isolation or exclusivity, the second management unit creates the network slice; or the second management unit configures the network slice to be isolated or exclusive; or the second management unit requests to allocate a second network resource or a second virtual resource, where the second network resource or the second virtual resource is used to create or configure the network slice. The second network resource or the second virtual resource is a resource dedicated to the network slice. In a specific application scenario, the second management unit may request a network resource from an NFM unit or an NM unit, or request a virtual resource from an NFVO unit.

In an example, when the isolation-sharing level of the network slice is hard isolation, the second management unit requests to allocate a network resource or a virtual resource to the network slice, where the request carries a hard isolation parameter; or the second management unit selects an existing network slice whose isolation-sharing level is hard isolation in a network.

In an example, when the isolation-sharing level of the network slice is soft isolation, the second management unit requests to allocate a network resource or a virtual resource to the network slice, where the request carries a soft isolation parameter; or the second management unit selects an existing network slice whose isolation-sharing level is soft isolation in a network.

In an example, when the isolation-sharing level of the network slice is application isolation, the second management unit requests to configure a network resource, where the request carries an application isolation parameter; or the second management unit selects an existing network slice whose isolation-sharing level is application isolation in a network; or the second management unit configures the network slice to be subject to application isolation.

In an example, when in the step 213, the network slice management request message sent by the first management unit to the second management unit further carries the isolation-sharing level of the network slice component that carries the at least one service component, in the step 214, the second management unit further selects, requests, or configures the network slice component based on the isolation-sharing level of the network slice component, or requests, based on the isolation-sharing level of the network slice component, to configure the network slice component.

In an example, when the isolation-sharing level of the network slice component is sharing, the second management unit selects an existing network slice component whose isolation-sharing level is sharing; or the second management unit requests or configures a network slice component whose isolation-sharing level is sharing; or the second management unit selects a network slice component descriptor of a network slice component whose isolation-sharing level is sharing, and creates or configures the network slice component based on the network slice component descriptor; or the second management unit requests to allocate a third network resource or a third virtual resource, where the third network resource or the third virtual resource is used to create or configure the network slice component.

The second management unit may request the network slice component from a third management unit. For example, the third management unit may be an NM unit or an NFM unit. The third network resource or the third virtual resource is a network resource that can be shared by a plurality of network slice components.

In an example, when the isolation-sharing level of the network slice component is isolation or exclusivity, the second management unit creates the network slice component; or the second management unit requests or configures a network slice component whose isolation-sharing level is isolation or exclusivity; or the second management unit configures the network slice component to be isolated or exclusive; or the second management unit selects a network slice component descriptor of a network slice component whose isolation-sharing level is isolation or exclusivity, and creates or configures the network slice component based on the network slice component descriptor; or the second management unit requests to allocate a fourth network resource or a fourth virtual resource, where the fourth network resource or the fourth virtual resource is used to create or configure the network slice component. The fourth network resource or the fourth virtual resource is a network resource dedicated to the network slice component.

In this embodiment of the present invention, the first management unit determines, based on the isolation-sharing requirement information of the service, the isolation-sharing level of the network slice that carries the service, and sends the isolation-sharing level of the network slice to the second management unit. The second management unit selects, creates, or configures the network slice based on the isolation-sharing level of the network slice, or requests, based on the isolation-sharing level of the network slice, to configure the network slice. Therefore, the network slice that carries the service is managed based on an isolation requirement of the service.

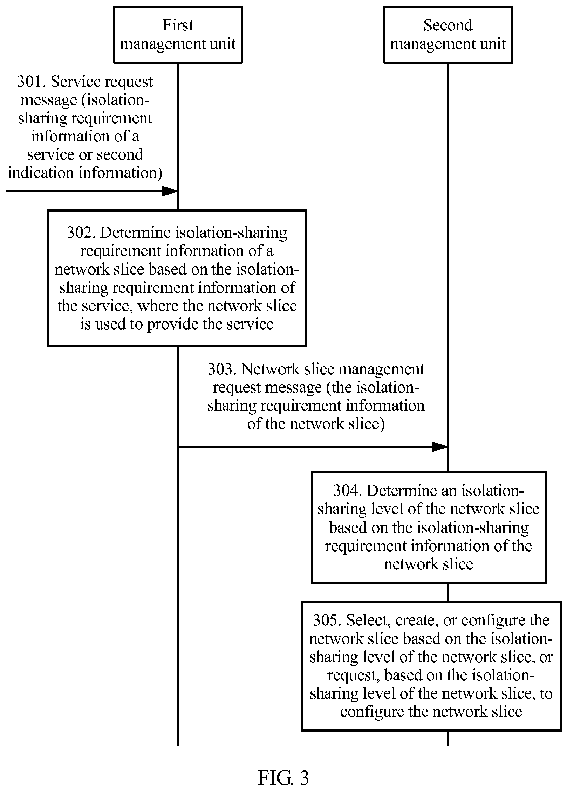

FIG. 3 is a schematic communication diagram of another network slice management method according to an embodiment of the present invention. The method may be based on the framework shown in FIG. 1. A first management unit first determines isolation-sharing requirement information of a network slice that carries a service, and then sends the isolation-sharing requirement information of the network slice to a second management unit. The isolation-sharing requirement information of the network slice does not include an isolation-sharing level of the network slice. The second management unit manages the network slice based on the isolation-sharing requirement information of the network slice that carries the service. Referring to FIG. 3, the method includes the following steps.

Step 301, a first management unit receives a service request message, where the service request message carries isolation-sharing requirement information of a service; or the service request message carries second indication information, the second indication information is used to obtain a service descriptor, and the service descriptor includes the isolation-sharing requirement information of the service.

In an example, the first management unit may be a customer (customer), a BSS, or an OSS in addition to an SO.

The isolation-sharing requirement information of the service includes at least one of the following: a service level of the service, a type of the service, a user level of the service, an isolation-sharing level of the service, SLA information of the service, or KPI information of the service.

In an example, the service request message further carries isolation-sharing requirement information of a service component; or the service descriptor further includes the isolation-sharing requirement information of the service component; or the service descriptor further includes a service component descriptor, and the service component descriptor includes the isolation-sharing requirement information of the service component. The service includes at least one service component.

The isolation-sharing requirement information of the service component includes at least one of the following: a service level of the service component, a type of the service component, a user level of the service component, an isolation-sharing level of the service component, SLA information of the service component, or KPI information of the service component.

Step 302, the first management unit determines isolation-sharing requirement information of a network slice based on the isolation-sharing requirement information of the service, where the network slice is used to provide the service.

The isolation-sharing requirement information of the network slice includes at least one of the following: a service level of a service carried in the network slice, a user level of the network slice, a priority of the network slice, a type of the network slice, SLA information of the network slice, or KPI information of the network slice.

In this embodiment of the present invention, the isolation-sharing requirement information of the network slice that carries the service may be determined according to a preset rule based on the isolation-sharing requirement information of the service.

In this embodiment of the present invention, when in the step 301, the first management unit further obtains isolation-sharing requirement information of at least one service component, in the step 302, the first management unit further determines, based on the isolation-sharing requirement information of the at least one service component, isolation-sharing requirement information of a network slice component that carries the service component.

The network slice component includes at least one of the following: a sub network slice, a network, a subnetwork, a network function, a network element, or a network service.

The isolation-sharing requirement information of the network slice component includes at least one of the following: a service level of a service component carried in the network slice component, a user level of the network slice component, a priority of the network slice component, a type of the network slice component, SLA information of the network slice component, or KPI information of the network slice component.

In an example, the first management unit determines, according to a preset rule based on the isolation-sharing requirement information of the service component, the isolation-sharing requirement information of the network slice component that carries the service component.

Step 303, the first management unit sends a network slice management request message to a second management unit, where the network slice management request message carries the isolation-sharing requirement information of the network slice.

In this embodiment of the present invention, when in the step 302, the first management unit further determines the isolation-sharing requirement information of the network slice component that carries the at least one service component, in the step 303, the network slice management request message sent by the first management unit to the second management unit may further carry the isolation-sharing requirement information of the network slice component that carries the at least one service component. The network slice includes at least one network slice component.

Step 304, the second management unit determines an isolation-sharing level of the network slice based on the isolation-sharing requirement information of the network slice.

In this embodiment of the present invention, when in the step 303, the network slice management request message sent by the first management unit to the second management unit further carries the isolation-sharing requirement information of the network slice component that carries the at least one service component, in the step 304, the second management unit may further determine an isolation-sharing level of the network slice component based on the isolation-sharing requirement information of the network slice component.

Step 305, the second management unit selects, creates, or configures the network slice based on the isolation-sharing level of the network slice, or requests, based on the isolation-sharing level of the network slice, to configure the network slice.

In an example, when the isolation-sharing level of the network slice is sharing, the second management unit selects an existing network slice whose isolation-sharing level is sharing; or the second management unit selects a network slice descriptor of a network slice whose isolation-sharing level is sharing, and creates or configures the network slice based on the network slice descriptor; or the second management unit requests to allocate a first network resource or a first virtual resource, where the first network resource or the first virtual resource is used to create or configure the network slice.

In an example, when the isolation-sharing level of the network slice is isolation or exclusivity, the second management unit creates the network slice; or the second management unit configures the network slice to be isolated or exclusive; or the second management unit requests to allocate a second network resource or a second virtual resource, where the second network resource or the second virtual resource is used to create or configure the network slice.

In this embodiment of the present invention, when in the step 304, the second management unit further determines the isolation-sharing level of the network slice component based on the isolation-sharing requirement information of the network slice component, in the step 305, the second management unit may further select, request, or configure the network slice component based on the isolation-sharing level of the network slice component, or request, based on the isolation-sharing level of the network slice component, to configure the network slice component.

In an example, when the isolation-sharing level of the network slice component is sharing, the second management unit selects an existing network slice component whose isolation-sharing level is sharing; or the second management unit requests or configures a network slice component whose isolation-sharing level is sharing; or the second management unit selects a network slice component descriptor of a network slice component whose isolation-sharing level is sharing, and creates or configures the network slice component based on the network slice component descriptor; or the second management unit requests to allocate a third network resource or a third virtual resource, where the third network resource or the third virtual resource is used to create or configure the network slice component.

In an example, when the isolation-sharing level of the network slice component is isolation or exclusivity, the second management unit creates the network slice component; or the second management unit requests or configures a network slice component whose isolation-sharing level is isolation or exclusivity; or the second management unit configures the network slice component to be isolated or exclusive; or the second management unit selects a network slice component descriptor of a network slice component whose isolation-sharing level is isolation or exclusivity, and creates or configures the network slice component based on the network slice component descriptor; or the second management unit requests to allocate a fourth network resource or a fourth virtual resource, where the fourth network resource or the fourth virtual resource is used to create or configure the network slice component.

The embodiment shown in FIG. 3 and the embodiments shown in FIG. 2a and FIG. 2b are all based on the framework shown in FIG. 1. Therefore, same steps are not described herein again.

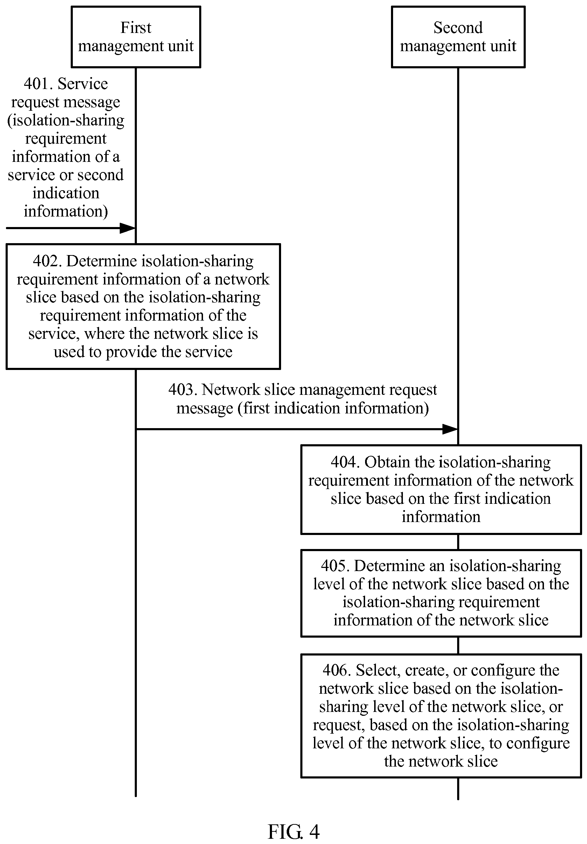

FIG. 4 is a schematic communication diagram of another network slice management method according to an embodiment of the present invention. The method may be based on the framework shown in FIG. 1. A first management unit first determines isolation-sharing requirement information of a network slice that carries a service, and then sends indication information of the isolation-sharing requirement information of the network slice to a second management unit. The second management unit manages the network slice based on the isolation-sharing requirement information of the network slice. Referring to FIG. 4, the method includes the following steps.

Step 401, a first management unit receives a service request message, where the service request message carries isolation-sharing requirement information of a service; or the service request message carries second indication information, the second indication information is used to obtain a service descriptor, and the service descriptor includes the isolation-sharing requirement information of the service.

Step 402, the first management unit determines isolation-sharing requirement information of a network slice based on the isolation-sharing requirement information of the service, where the network slice is used to provide the service.

Step 403, the first management unit sends a network slice management request message to a second management unit, where the network slice management request message carries first indication information, and the first indication information is used to obtain the isolation-sharing requirement information of the network slice.

In an example, the first indication information is an identifier of a network slice descriptor, and the network slice descriptor includes the isolation-sharing requirement information of the network slice.

In an example, the first indication information is requirement information of a network slice descriptor, the requirement information of the network slice descriptor is used to identify the network slice descriptor, and the network slice descriptor includes the isolation-sharing requirement information of the network slice.

Step 404, the second management unit obtains the isolation-sharing requirement information of the network slice based on the first indication information.

Step 405, the second management unit determines an isolation-sharing level of the network slice based on the isolation-sharing requirement information of the network slice.

The step 405 is an optional step. When the isolation-sharing requirement information of the network slice includes the isolation-sharing level of the network slice, this step does not need to be performed.

Step 406, the second management unit selects, creates, or configures the network slice based on the isolation-sharing level of the network slice, or requests, based on the isolation-sharing level of the network slice, to configure the network slice.

Both the embodiment shown in FIG. 4 and the embodiment shown in FIG. 3 are based on the framework shown in FIG. 1 and an only difference is that the network slice management request message carries the indication information of the isolation-sharing requirement information of the network slice rather than the isolation-sharing requirement information of the network slice. Therefore, same steps are not described herein again.

The foregoing mainly describes the solutions in the embodiments of the present invention from the perspective of interaction between network elements. It may be understood that, to implement the foregoing functions, the network elements, such as the first management unit and the second management unit, include a corresponding hardware structure and/or software module for performing each of the functions. A person skilled in the art should be easily aware that, the units and algorithm steps in the examples described with reference to the embodiments disclosed in this specification can be implemented in the present invention by hardware or a combination of hardware and computer software. Whether the functions are performed by hardware or by computer software driving hardware depends on particular applications and design constraint conditions of the technical solutions. A person skilled in the art may use different methods to implement the described functions for each particular application, but it should not be considered that the implementation goes beyond the scope of the present invention as defined by the appended claims.

In the embodiments of the present invention, the first management unit, the second management unit, and the like may be divided into function modules according to the foregoing method examples. For example, each function module may be obtained through division based on each function, or two or more functions may be integrated into one processing module. The integrated module may be implemented in a form of hardware, or may be implemented in a form of a software function module. It should be noted that the module division in the embodiments of the present invention is an example, and is merely logical function division. There may be another division manner during actual implementation.

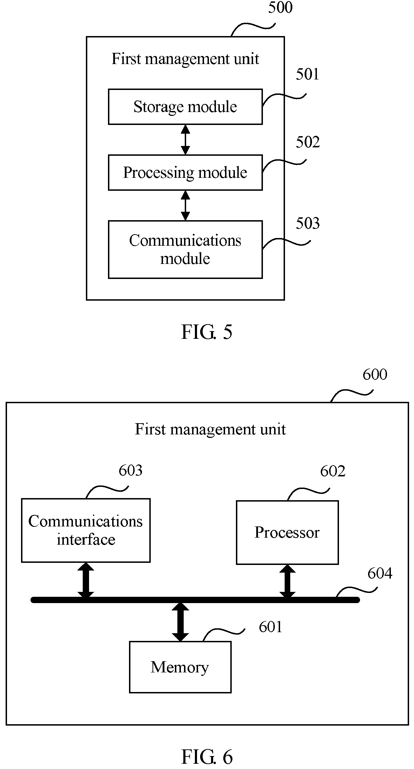

When the integrated module is used, FIG. 5 is a possible schematic structural diagram of the first management unit in the foregoing embodiments. A first management unit 500 includes a processing module 502 and a communications module 503. The processing module 502 is configured to control and manage an action of the first management unit. For example, the processing module 502 is configured to support the first management unit in performing the step 201 and the step 202 in FIG. 2a, the step 211, the step 212, and the step 213 in FIG. 2b, the step 301, the step 302, and the step 303 in FIG. 3, and the step 401, the step 402, and the step 403 in FIG. 4; and/or is configured to perform another process used for the technology described in this specification. The communications module 503 is configured to support communication between the first management unit and another network entity, for example, communication between the first management unit and a second management unit. The first management unit may further include a storage module 501. The storage module 501 is configured to store program code and data of the first management unit.

The processing module 502 may be a processor or a controller, for example, may be a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processing module 502 may implement or execute various example logical blocks, modules, and circuits that are described with reference to the content disclosed in the present invention. The processing module 702 may alternatively be a combination implementing a computing function, for example, a combination including one or more microprocessors, or a combination of a DSP and a microprocessor. The communications module 503 may be a communications interface, a transceiver, a transceiver circuit, or the like. The communications interface is a general term, and may include one or more interfaces. The storage module 501 may be a memory.

When the processing module 502 is a processor, the communications module 503 is a communications interface, and the storage module 501 is a memory, the first management unit in this embodiment of the present invention may be a first management unit 600 shown in FIG. 6. Referring to FIG. 6, the first management unit 600 includes a processor 602, a communications interface 603, and a memory 601. Optionally, the first management unit 600 may further include a bus 604. The communications interface 603, the processor 602, and the memory 601 may be interconnected by using the bus 604. The bus 604 may be a peripheral component interconnect (Peripheral Component Interconnect, PCI for short) bus, an extended industry standard architecture (Extended Industry Standard Architecture, EISA for short) bus, or the like. The bus 604 may be categorized as an address bus, a data bus, a control bus, or the like. For ease of indication, the bus is indicated by using only one bold line in FIG. 6. However, it does not indicate that there is only one bus or only one type of bus.

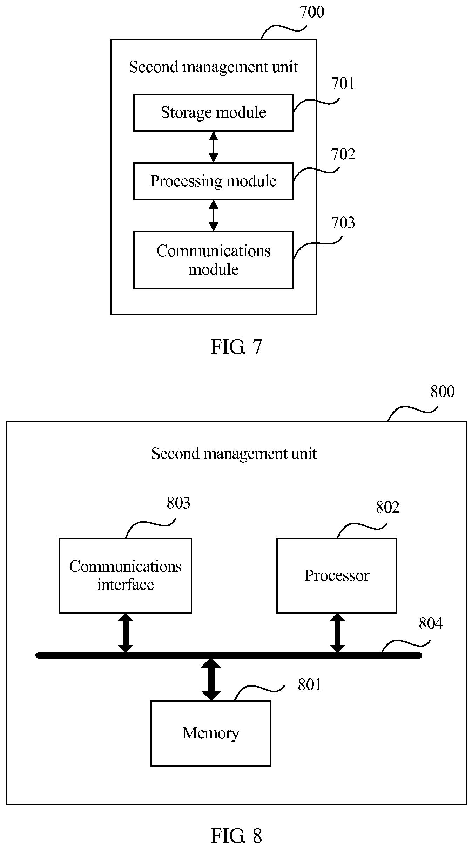

When the integrated module is used, FIG. 7 is a possible schematic structural diagram of the second management unit in the foregoing embodiments. A second management unit 700 includes a processing module 702 and a communications module 703. The processing module 702 is configured to control and manage an action of the second management unit. For example, the processing module 702 is configured to support the second management unit in performing the step 203 in FIG. 2a, the step 214 in FIG. 2b, the step 304 and the step 305 in FIG. 3, and the step 404, the step 405, and the step 406 in FIG. 4; and/or is configured to perform another process used for the technology described in this specification. The communications module 703 is configured to support communication between the second management unit and another network entity, for example, communication between the second management unit and a first management unit. The second management unit may further include a storage module 701. The storage module 701 is configured to store program code and data of the second management unit.

The processing module 702 may be a processor or a controller, for example, may be a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processing module 702 may implement or execute various example logical blocks, modules, and circuits that are described with reference to the content disclosed in the present invention. The processor may alternatively be a combination implementing a computing function, for example, a combination including one or more microprocessors, or a combination of a DSP and a microprocessor. The communications module 703 may be a communications interface, a transceiver, a transceiver circuit, or the like. The communications interface is a general term, and may include one or more interfaces. The storage module 701 may be a memory.

When the processing module 702 is a processor, the communications module 703 is a communications interface, and the storage module 701 is a memory, the second management unit in this embodiment of the present invention may be a second management unit 800 shown in FIG. 8.

Referring to FIG. 8, the second management unit 800 includes a processor 802, a communications interface 803, and a memory 801. Optionally, the second management unit 800 may further include a bus 804. The communications interface 803, the processor 802, and the memory 801 may be interconnected by using the bus 804. The bus 804 may be a peripheral component interconnect (Peripheral Component Interconnect, PCI for short) bus, an extended industry standard architecture (Extended Industry Standard Architecture, EISA for short) bus, or the like. The bus 804 may be categorized as an address bus, a data bus, a control bus, or the like. For ease of indication, the bus is indicated by using only one bold line in FIG. 8. However, it does not indicate that there is only one bus or only one type of bus.

The methods or algorithm steps described with reference to the content disclosed in the present invention may be implemented by hardware, or may be implemented by executing a software instruction by a processor. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or a storage medium in any other forms well-known in the art. An example storage medium is coupled to the processor, so that the processor can read information from the storage medium, and can write information into the storage medium. Certainly, the storage medium may be a component of the processor. The processor and the storage medium may be located in an ASIC. In addition, the ASIC may be located in a core network interface device. Certainly, the processor and the storage medium may exist in the core network interface device as discrete components.

A person skilled in the art should be aware that in one or more of the foregoing examples, the functions described in the present invention may be implemented by hardware, software, firmware, or any combination thereof. When being implemented by software, these functions may be stored in a computer-readable medium or transmitted as one or more instructions or code in the computer-readable medium. The computer-readable medium includes a computer storage medium and a communications medium. The communications medium includes any medium that enables a computer program to be transmitted from one place to another place. The storage medium may be any available medium accessible to a general-purpose or dedicated computer. The objectives, technical solutions, and benefit effects of the present invention are further described in detail in the foregoing specific implementations. It should be understood that the foregoing descriptions are merely specific implementations of the present invention, but are not intended to limit the protection scope of the present invention as defined by the appended claims

## Claims

1. A network slice management method, wherein the method comprises:
obtaining (201), by a first management unit (500), isolation-sharing requirement information of a network slice, wherein the obtaining, by a first management unit (500), isolation-sharing requirement information of the network slice comprises:
receiving (211), by the first management unit (500), a service request message, wherein the service request message carries isolation-sharing requirement information of a service; or the service request message carries second indication information, the second indication information is used to obtain a service descriptor, and the service descriptor comprises the isolation-sharing requirement information of the service; and
determining (212), by the first management unit (500), an isolation-sharing level of the network slice based on the isolation-sharing requirement information of the service, wherein the network slice is used to provide the service, wherein the isolation-sharing level of the network slice indicates different degrees of isolation of the network slice including sharing, exclusivity, isolation, application isolation, soft isolation and hard isolation; and
sending (213), by the first management unit (500), a network slice management request message to a second management unit (700), wherein the network slice management request message carries the isolation-sharing level of the network slice, and the network slice management request message is used to instruct the second management unit (700) to select, create, configure, or request, based on the isolation-sharing level of the network slice, to configure the network slice.

2. A network slice management method, wherein the method comprises:
receiving, by a second management unit (700), a network slice management request message from a first management unit (500), wherein the network slice management request message carries an isolation-sharing level of a network slice, wherein the isolation-sharing level of the network slice indicates different degrees of isolation of the network slice including sharing, exclusivity, isolation, application isolation, soft isolation and hard isolation; and
selecting, creating, or configuring, by the second management unit (700), the network slice based on the isolation-sharing level of the network slice, or requesting, by the second management unit (700) based on the isolation-sharing level of the network slice, to configure the network slice.

3. The method according to claim 2, wherein when the isolation-sharing level of the network slice is sharing, the selecting, creating, or configuring the network slice, or the requesting to configure the network slice comprises:
selecting an existing network slice, whose isolation-sharing level is sharing; or selecting a network slice descriptor of a network slice whose isolation-sharing level is sharing, and creating or configuring the network slice based on the network slice descriptor.

4. The method according to claim 2, wherein when the isolation-sharing level of the network slice is isolation, the selecting, creating, or configuring the network slice, or the requesting to configure the network slice comprises:
creating the network slice; or
requesting to allocate a second network resource or a second virtual resource, wherein the second network resource or the second virtual resource, which is a resource dedicated to the network slice, is used to create the network slice.

5. A first management unit (500), comprising a processing module (502) and a communications module (503), wherein
the processing module (502) is configured to: obtain isolation-sharing requirement information of a network slice by using the communications module (503), wherein the processing module (502) is specifically configured to: receive a service request message by using the communications module (503), wherein the service request message carries isolation-sharing requirement information of a service; or the service request message carries second indication information, the second indication information is used to obtain a service descriptor, and the service descriptor comprises the isolation-sharing requirement information of the service; and determine an isolation-sharing level of the network slice based on the isolation-sharing requirement information of the service, wherein the network slice is used to provide the service, wherein the isolation-sharing level of the network slice indicates different degrees of isolation of the network slice including sharing, exclusivity, isolation, application isolation, soft isolation and hard isolation; and send a network slice management request message to a second management unit (700) by using the communications module (503), wherein the network slice management request message carries the isolation-sharing level of the network slice, and the network slice management request message is used to instruct the second management unit (700) to select, create, configure, or request, based on the isolation-sharing level of the network slice, to configure the network slice.

6. A second management unit (700), comprising a processing module (702) and a communications module (703), wherein
the processing module (702) is configured to: receive a network slice management request message from a first management unit (500) by using the communications module (703), wherein the network slice management request message carries an isolation-sharing level of a network slice, wherein the isolation-sharing level of the network slice indicates different degrees of isolation of the network slice including sharing, exclusivity, isolation, application isolation, soft isolation and hard isolation; and select, create, or configure the network slice based on the network slice management request message, or request, based on the isolation-sharing level of the network slice, to configure the network slice.

7. A computer-readable storage medium comprising instructions which, when executed by a computer, cause the computer to carry out the steps of the method of claim 1.

8. A computer-readable storage medium comprising instructions which, when executed by a computer, cause the computer to carry out the steps of any one of the method of claim 2 to 4.

9. A computer program product, comprising instructions, when being executed, cause a first management unit to carry out steps of the method of claim 1.

10. A computer program product, comprising instructions, when being executed, cause a second management unit to carry out steps of any one of the method of claims 2 to 4.

## Patentansprüche

1. Netzwerk-Slice-Verwaltungsverfahren, wobei das Verfahren umfasst:
Erhalten (201), durch eine erste Verwaltungseinheit (500) von Isolation-Freigabe-Erfordernisinformationen eines Netzwerk-Slice, wobei das Erhalten, durch eine erste Verwaltungseinheit (500). von Isolation-Freigabe-Erfordernisinformationen des Netzwerk-Slice umfasst:
Empfangen (211), durch die erste Verwaltungseinheit (500), einer Dienstanforderungsnachricht, wobei die Dienstanforderungsnachricht Isolation-Freigabe-Erfordernisinformationen eines Dienstes trägt; oder die Dienstanforderungsnachricht zweite Angabeinformationen trägt, wobei zweiten Angabeinformationen verwendet werden, um einen Dienstdeskriptor zu erhalten und der Dienstdeskriptor die Isolation-Freigabe-Erfordernisinformationen des Dienstes umfasst; und
Bestimmen (212), durch die erste Verwaltungseinheit (500), einer Isolation-Freigabe-Ebene des Netzwerk-Slice basierend auf den Isolation-Freigabe-Erfordernisinformationen des Dienstes, wobei das Netzwerk-Slice verwendet wird, um den Dienst bereitzustellen, wobei die Isolation-Freigabe-Ebene des Netzwerk-Slice verschiedene Isolationsgrade des Netzwerk-Slice angibt, einschließlich Freigabe, Exklusivität, Isolation, Anwendungsisolation, weicher Isolation und harter Isolation; und
Senden (213), durch die erste Verwaltungseinheit (500), einer Netzwerk-Slice-Verwaltungsanforderungsnachricht an eine zweite Verwaltungseinheit (700), wobei die Netzwerk-Slice-Verwaltungsanforderungsnachricht die Isolation-Freigabe-Ebene des Netzwerk-Slice trägt und die Netzwerk-Slice-Verwaltungsanforderungsnachricht verwendet wird, um die zweite Verwaltungseinheit (700) anzuweisen, basierend auf der Isolation-Freigabe-Ebene des Netzwerk-Slice, das Netzwerk-Slice auszuwählen, zu erstellen, zu konfigurieren oder zum Konfigurieren anzufordern.

2. Netzwerk-Slice-Verwaltungsverfahren, wobei das Verfahren umfasst:
Empfangen, durch eine zweite Verwaltungseinheit (700), einer Netzwerk-Slice-Verwaltungsanforderungsnachricht von einer ersten Verwaltungseinheit (500), wobei die Netzwerk-Slice-Verwaltungsanforderungsnachricht eine Isolation-Freigabe-Ebene eines Netzwerk-Slice trägt, wobei die Isolation-Freigabe-Ebene des Netzwerk-Slice verschiedene Isolationsgrade des Netzwerk-Slice angibt, einschließlich Freigabe, Exklusivität, Isolation, Anwendungsisolation, weicher Isolation und harter Isolation; und
Auswählen, Erstellen oder Konfigurieren, durch die zweite Verwaltungseinheit (700), des Netzwerk-Slice basierend auf der Isolation-Freigabe-Ebene des Netzwerk-Slice, oder Anfordern, durch die zweite Verwaltungseinheit (700) basierend auf der Isolation-Freigabe-Ebene des Netzwerk-Slice, zum Konfigurieren des Netzwerk-Slice.

3. Verfahren nach Anspruch 2, wobei, wenn die Isolation-Freigabe-Ebene des Netzwerk-Slice die Freigabe ist, das Auswählen, Erstellen oder Konfigurieren des Netzwerk-Slice oder das Anfordern zum Konfigurieren des Netzwerk-Slice umfasst:
Auswählen eines vorhandenen Netzwerk-Slice, dessen Isolation-Freigabe-Ebene die Freigabe ist; oder Auswählen eines Netzwerk-Slice-Deskriptors eines Netzwerk-Slice, dessen Isolation-Freigabe-Ebene die Freigabe ist und Erstellen oder Konfigurieren des Netzwerk-Slice basierend auf dem Netzwerk-Slice-Deskriptor.

4. Verfahren nach Anspruch 2, wobei, wenn die Isolation-Freigabe-Ebene des Netzwerk-Slice die Isolation ist, das Auswählen, Erstellen oder Konfigurieren des Netzwerk-Slice oder das Anfordern zum Konfigurieren des Netzwerk-Slice umfasst:
Erstellen des Netzwerk-Slice; oder
Anfordern zum Zuweisen einer zweiten Netzwerkressource oder einer zweiten virtuelle Ressource, wobei die zweite Netzwerkressource oder die zweite virtuelle Ressource, die eine Ressource ist, die dem Netzwerk-Slice zugeordnet ist, verwendet wird, um das Netzwerk-Slice zu erstellen.

5. Erste Verwaltungseinheit (500), die ein Verarbeitungsmodul (502) und ein Kommunikationsmodul (503) umfasst, wobei
das Verarbeitungsmodul (502) konfiguriert ist zum: Erhalten von Isolation-Freigabe-Erfordernisinformationen eines Netzwerk-Slice durch Verwenden des Kommunikationsmoduls (503), wobei das Verarbeitungsmodul (502) speziell konfiguriert ist zum: Empfangen einer Dienstanforderungsnachricht durch Verwenden des Kommunikationsmoduls (503), wobei die Dienstanforderungsnachricht Isolation-Freigabe-Erfordernisinformationen eines Dienstes trägt; oder die Dienstanforderungsnachricht zweite Angabeinformationen trägt, wobei die zweiten Angabeinformationen verwendet werden, um einen Dienstdeskriptor zu erhalten und der Dienstdeskriptor die Isolation-Freigabe-Erfordernisinformationen des Dienstes umfasst; und Bestimmen einer Isolation-Freigabe-Ebene des Netzwerk-Slice basierend auf den Isolation-Freigabe-Erfordernisinformationen des Dienstes, wobei das Netzwerk-Slice verwendet wird, um den Dienst bereitzustellen, wobei die Isolation-Freigabe-Ebene des Netzwerk-Slice verschiedene Isolationsgrade angibt, einschließlich Freigabe, Exklusivität, Isolation, Anwendungsisolation, weicher Isolation und harter Isolation; und Senden einer Netzwerk-Slice-Verwaltungsanforderungsnachricht an eine zweite Verwaltungseinheit (700) durch Verwenden des Kommunikationsmoduls (503), wobei die Netzwerk-Slice-Vverwaltungsanforderungsnachricht die Isolation-Freigabe-Ebene des Netzwerk-Slice trägt und die Netzwerk-Slice-Verwaltungsanforderungsnachricht verwendet wird, um die zweite Verwaltungseinheit (700) anzuweisen, basierend auf der Isolation-Freigabe-Ebene des Netzwerk-Slice, das Netzwerk-Slice auszuwählen, zu erstellen, zu konfigurieren oder zum Konfigurieren anzufordern.

6. Zweite Verwaltungseinheit (700), die ein Verarbeitungsmodul (702) und ein Kommunikationsmodul (703) umfasst, wobei
das Verarbeitungsmodul (702) konfiguriert ist zu: Empfangen einer Netzwerk-Slice-Verwaltungsanforderungsnachricht von einer ersten Verwaltungseinheit (500) durch Verwenden des Kommunikationsmoduls (703), wobei die Netzwerk-Slice-Verwaltungsanforderungsnachricht eine Isolation-Freigabe-Ebene eines Netzwerk-Slice trägt, wobei die Isolation-Freigabe-Ebene des Netzwerk-Slice verschiedene Isolationsgrade des Netzwerk-Slice angibt, einschließlich Freigabe, Exklusivität, Isolation, Anwendungsisolation, weicher Isolation und harter Isolation; und Auswählen, Erstellen oder Konfigurieren des Netzwerk-Slice basierend auf der Netzwerk-Slice-Verwaltungsanforderungsnachricht, oder Anfordern, basierend auf der Isolation-Freigabe-Ebene des Netzwerk-slices, zum Konfigurieren des Netzwerk-Slice.

7. Computerlesbares Speichermedium, das Anweisungen umfasst, die, wenn sie durch einen Computer ausgeführt werden, den Computer veranlassen, die Schritte des Verfahrens nach Anspruch 1 durchzuführen.

8. Computerlesbares Speichermedium, das Anweisungen umfasst, die, wenn sie durch einen Computer ausgeführt werden, den Computer veranlassen, die Schritte nach einem des Verfahrens nach Anspruch 2 bis 4 durchzuführen.

9. Computerprogrammprodukt, das Anweisungen umfasst, wenn sie ausgeführt werden, die eine erste Verwaltungseinheit veranlassen, Schritte des Verfahrens nach Anspruch 1 durchzuführen.

10. Computerprogrammprodukt, das Anweisungen umfasst, wenn sie ausgeführt werden, die eine zweite Verwaltungseinheit veranlassen, Schritte nach einem des Verfahrens nach den Ansprüchen 2 bis 4 durchzuführen.

## Revendications

1. Procédé de gestion de tranches de réseau, dans lequel le procédé comprend :
l'obtention (201), par une première unité de gestion (500), d'informations d'exigence de partage-d'isolation d'une tranche de réseau, l'obtention, par une première unité de gestion (500), d'informations d'exigence de partage-d'isolation de la tranche de réseau comprenant :
la réception (211), par la première unité de gestion (500), d'un message de demande de service, le message de demande de service transportant des informations d'exigence de partage-d'isolation d'un service ; ou le message de demande de service transportant des secondes informations d'indication, les secondes informations d'indication étant utilisées pour obtenir un descripteur de service, et le descripteur de service comprenant les informations d'exigence de partage-d'isolation du service ; et
la détermination (212), par la première unité de gestion (500), d'un niveau de partage-d'isolation de la tranche de réseau sur la base des informations d'exigence de partage-d'isolation du service, la tranche de réseau étant utilisée pour fournir le service, le niveau de partage-d'isolation de la tranche de réseau indiquant différents degrés d'isolation de la tranche de réseau, y compris le partage, l'exclusivité, l'isolation, l'isolation d'application, l'isolation souple et l'isolation stricte ; et
l'envoi (213), par la première unité de gestion (500), d'un message de demande de gestion de tranche de réseau à une seconde unité de gestion (700), le message de demande de gestion de tranche de réseau transportant le niveau de partage-d'isolation de la tranche de réseau, et le réseau un message de demande de gestion de tranche étant utilisé pour ordonner à la seconde unité de gestion (700) de sélectionner, créer, configurer ou demander, sur la base du niveau de partage-d'isolation de la tranche de réseau, de configurer la tranche de réseau.

2. Procédé de gestion de tranches de réseau, dans lequel le procédé comprend :
la réception, par une seconde unité de gestion (700), d'un message de demande de gestion de tranche de réseau provenant d'une première unité de gestion (500), le message de demande de gestion de tranche de réseau transportant un niveau de partage-d'isolation d'une tranche de réseau, le niveau de partage-d'isolation de la tranche de réseau indiquant différents degrés d'isolation de la tranche de réseau, y compris le partage, l'exclusivité, l'isolation, l'isolation d'application, l'isolation souple et l'isolation stricte ; et
la sélection, la création ou la configuration, par la seconde unité de gestion (700), de la tranche de réseau sur la base du niveau de partage-d'isolation de la tranche de réseau, ou la demande, par la seconde unité de gestion (700) sur la base du niveau de partage-d'isolation de la tranche réseau, pour configurer la tranche de réseau.

3. Procédé selon la revendication 2, dans lequel lorsque le niveau de partage-d'isolation de la tranche de réseau est le partage, la sélection, la création ou la configuration de la tranche de réseau, ou la demande de configuration de la tranche de réseau comprend :
la sélection d'une tranche de réseau existante, dont le niveau de partage-d'isolation est le partage ; ou la sélection d'un descripteur de tranche de réseau d'une tranche de réseau dont le niveau de partage-d'isolation est le partage, et la création ou la configuration de la tranche de réseau sur la base du descripteur de tranche de réseau.

4. Procédé selon la revendication 2, dans lequel lorsque le niveau de partage-d'isolation de la tranche de réseau est l'isolation, la sélection, la création ou la configuration de la tranche de réseau, ou la demande de configuration de la tranche de réseau comprend :
la création de la tranche de réseau ; ou
la demande d'attribution d'une seconde ressource de réseau ou d'une seconde ressource virtuelle, la seconde ressource de réseau ou la seconde ressource virtuelle, qui est une ressource dédiée à la tranche de réseau, étant utilisée pour créer la tranche de réseau.

5. Première unité de gestion (500), comprenant un module de traitement (502) et un module de communication (503), dans laquelle
le module de traitement (502) est configuré pour : obtenir des informations d'exigence de partage-d'isolation d'une tranche de réseau en utilisant le module de communications (503), le module de traitement (502) étant spécifiquement configuré pour : recevoir un message de demande de service en utilisant le module de communication (503), le message de demande de service transportant des informations d'exigence de partage-d'isolation d'un service ; ou le message de demande de service transportant des secondes informations d'indication, les secondes informations d'indication étant utilisées pour obtenir un descripteur de service, et le descripteur de service comprenant les informations d'exigence de partage-d'isolation du service ; et déterminer un niveau de partage-d'isolation de la tranche de réseau sur la base des informations d'exigence de partage-d'isolation du service, la tranche de réseau étant utilisée pour fournir le service, le niveau de partage-d'isolation de la tranche de réseau indiquant différents degrés d'isolation de la tranche de réseau y compris le partage, l'exclusivité, l'isolation, l'isolation d'application, l'isolation souple et l'isolation stricte ; et envoyer un message de demande de gestion de tranche de réseau à une seconde unité de gestion (700) en utilisant le module de communication (503), le message de demande de gestion de tranche de réseau transportant le niveau de partage-d'isolation de la tranche de réseau, et le message de demande de gestion de tranche de réseau étant utilisé pour ordonner à la seconde unité de gestion (700) de sélectionner, créer, configurer ou demander, sur la base du niveau de partage-d'isolation de la tranche de réseau, de configurer la tranche de réseau.

6. Seconde unité de gestion (700), comprenant un module de traitement (702) et un module de communication (703), dans laquelle
le module de traitement (702) est configuré pour : recevoir un message de demande de gestion de tranche de réseau d'une première unité de gestion (500) en utilisant le module de communication (703), le message de demande de gestion de tranche de réseau transportant un niveau de partage-d'isolation d'une tranche de réseau, le niveau de partage-d'isolation de la tranche de réseau indiquant différents degrés d'isolation de la tranche de réseau y compris le partage, l'exclusivité, l'isolation, l'isolation d'application, l'isolation souple et l'isolation stricte ; et sélectionner, créer ou configurer la tranche de réseau sur la base du message de demande de gestion de tranche de réseau, ou demande, sur la base du niveau de partage-d'isolation de la tranche de réseau, pour configurer la tranche de réseau.

7. Support de stockage lisible par ordinateur, comprenant des instructions qui, lorsqu'elles sont exécutées par un ordinateur, amènent l'ordinateur à réaliser les étapes du procédé selon la revendication 1.

8. Support de stockage lisible par ordinateur comprenant des instructions qui, lorsqu'elles sont exécutées par un ordinateur, amènent l'ordinateur à réaliser les étapes de l'un quelconque des procédés selon les revendications 2 à 4.

9. Produit-programme d'ordinateur, comprenant des instructions, lorsqu'elles sont exécutées, amenant une première unité de gestion à réaliser les étapes du procédé selon la revendication 1.

10. Produit-programme informatique, comprenant des instructions, lorsqu'elles sont exécutées, amenant une seconde unité de gestion à effectuer des étapes de l'une quelconque du procédé des revendications 2 à 4.
